# EUROPÄISCHE PATENTANMELDUNG

(11) **EP 3 613 591 A1**
(43) Veröffentlichungstag der Anmeldung: **26.02.2020**
(21) Anmeldenummer: 18189847.9
(22) Anmeldetag: 21.08.2018
(51) Int. Cl.: B32B 27/08, B32B 27/20, B32B 27/32, B32B 29/00, B42D 25/00

(54) **FÄLSCHUNGSSICHERE PRODUKTVERPACKUNG**

(71) Anmelder: Etimex Primary Packaging GmbH, 89165 Dietenheim (DE)
(72) Erfinder: HERMANN, Michael, 88433 Schemmerhofen (DE); VOGT, Marc, 89614 Öpfingen (DE)
(74) Vertreter: Hoeger, Stellrecht & Partner Patentanwälte mbB

(57) **Zusammenfassung**

Die vorliegende Erfindung betrifft eine fälschungssichere Produktverpackung, umfassend eine flächige Schicht mit einer Polymermatrix, wobei in der Polymermatrix eine Vielzahl von Feststoffpartikeln enthalten sind, deren zufällige Anordnung innerhalb eines definierten Flächenbereichs der Schicht optisch detektierbar ist.

Die Erfindung betrifft ferner ein Verfahren zum Registrieren und Identifizieren von Produktverpackungen, umfassend die Durchführung der folgenden Schritte als Registrierung für jede von einer Vielzahl von fälschungssicheren Produktverpackungen:
- optisches Detektieren der Anordnung der Feststoffpartikel innerhalb eines definierten Flächenbereichs der Schicht, und
- Auswählen einer Mehrzahl von Feststoffpartikeln, bevorzugt von drei bis zehn Feststoffpartikeln, und elektronisches Speichern von deren Positionen innerhalb des definierten Flächenbereichs, in Bezug auf eine Referenzposition, in einer Datenbank; und
ferner umfassend eine Identifizierung von registrierten Produktverpackungen durch optisches Detektieren der Anordnung der Feststoffpartikel innerhalb des definierten Flächenbereichs der Schicht, und Vergleichen der Anordnung mit den in der Datenbank gespeicherten Positionen.

## Beschreibung

Die vorliegende Erfindung betrifft eine fälschungssichere Produktverpackung, die eine flächige Schicht mit einer Polymermatrix umfasst.

Die Erfindung betrifft ferner ein Verfahren zum Registrieren und Identifizieren von derartigen Produktverpackungen.

Die Fälschung von Produkten, insbesondere von Markenprodukten bekannter Hersteller, kommt in fast allen Warenbereichen vor. Dabei werden Produkte, die in Art und Aufmachung denjenigen des Originalherstellers gleichen, von einem unberechtigten Dritten in den Verkehr gebracht und fälschlicherweise als Produkte des Originalherstellers ausgegeben. Diese Fälschungen werden zum Teil mit hoher krimineller Energie betrieben und verursachen immense wirtschaftliche Schäden.

Vor allem bei solchen Produkten, deren Echtheit nur mit hohem Aufwand überprüft werden kann, besteht eine Strategie zur Erschwerung von Produktfälschungen darin, die Produktverpackung mit möglichst fälschungssicheren Merkmalen auszustatten, wie z.B. einem Hologramm oder ähnlichen Sicherheitsmerkmalen. Dies betrifft insbesondere pharmazeutische Präparate, bei denen der Endverbraucher keine Möglichkeit hat, ein gefälschtes Produkt zu erkennen. Neben den wirtschaftlichen Schäden für die Originalhersteller können gefälschte Produkte, deren Wirkstoffzusammensetzung vom Originalpräparat abweicht, auch zu ernsten gesundheitlichen Gefahren für die Verbraucher führen.

Bislang sind allerdings keine Sicherheitsmerkmale an Produktverpackungen bekannt, die von unberechtigten Dritten nicht mit einem entsprechenden Aufwand kopiert werden könnten.

Aufgrund von immer besseren und leichter verfügbaren Reproduktionstechniken wird der benötigte Aufwand für solche Kopien tendenziell immer geringer.

Der Erfindung liegt daher die Aufgabe zugrunde, eine fälschungssichere Produktverpackung vorzuschlagen, die nicht kopiert werden kann oder nur mit einem Aufwand, der wesentlich höher ist als bei bekannten Produktverpackungen.

Diese Aufgabe wird bei der Produktverpackung der eingangs genannten Art erfindungsgemäß dadurch gelöst, dass in der Polymermatrix eine Vielzahl von Feststoffpartikeln enthalten sind, deren zufällige Anordnung innerhalb eines definierten Flächenbereichs der Schicht optisch detektierbar ist.

Die Feststoffpartikel sind innerhalb der flächigen Schicht der Polymermatrix statistisch verteilt, sodass sich für jede einzelne Produktverpackung innerhalb des definierten Flächenbereichs eine einmalige, zufällige Anordnung ergibt, die bei keiner zweiten Produktverpackung in dieser Form wieder auftritt. Die Herstellung einer exakten Kopie einer bestimmten Produktverpackung durch eine bewusste Anordnung der Feststoffpartikel an den vorgegebenen Positionen ist praktisch unmöglich.

Doch selbst dann, wenn einem Fälscher eine exakte Kopie einer bestimmten Produktverpackung gelingen sollte, könnte eine solche Fälschung leicht identifiziert werden, wenn vom Originalhersteller die optisch detektierte Anordnung von Feststoffpartikeln für jede Produktverpackung in einer Datenbank registriert wird. An einem späteren Punkt innerhalb des Vertriebsweges kann dann jede Produktverpackung anhand der Anordnung identifiziert werden, wobei sofort auffällt, wenn dieselbe Anordnung mehrfach auftaucht. Ein solches Verfahren ist ebenfalls Teil der Erfindung und wird weiter unten im Einzelnen beschrieben.

Bei einer vorteilhaften Ausführungsform der Erfindung sind in der Polymermatrix 10 bis 50 Feststoffpartikel pro cm² enthalten, bevorzugt 20 bis 30 Feststoffpartikel cm². Diese Partikelzahlen sind geringer als diejenigen, die typischerweise bei Verwendung von Feststoffpartikeln als Füllstoff in Polymermaterialien vorliegen. Dadurch ist es im Rahmen der Erfindung möglich, einzelne Feststoffpartikel bei der optischen Detektion der Anordnung zu identifizieren.

Die Feststoffpartikel weisen bevorzugt eine mittlere Partikelgröße von ca. 1 bis ca. 10 µm auf, weiter bevorzugt von ca. 3 bis ca. 6 µm. Partikel in diesem Größenbereich sind in der Regel mit dem bloßen Auge nicht sichtbar, können aber mit entsprechenden optischen Vorrichtungen zuverlässig detektiert werden.

Günstig ist es, wenn die Feststoffpartikel eine enge Partikelgrößenverteilung aufweisen, bei der mindestens 90 Gew.% aller Partikel eine Größe im Bereich von ±10% um den Mittelwert aufweisen. Dadurch kann die optische Detektion sehr zuverlässig durchgeführt werden, indem sie auf einen engen Partikelgrößenbereich optimiert werden kann.

Die Feststoffpartikel bilden vorzugsweise einen farblichen Kontrast zu der Polymermatrix. Die optische Detektion kann dann unter Verwendung von Licht im sichtbaren Bereich durchgeführt werden.

Bei einer vorteilhaften Ausführungsform der Erfindung sind die Feststoffpartikel ausgewählt aus anorganischen oder organischen Farbpigmenten. Um einen farbigen Kontrast zu erzielen, können bei einer transluzenten Polymermatrix z.B. Weißpigmente wie Titandioxid oder Talkum als Feststoffpartikel eingesetzt werden, oder im Fall einer nicht transluzenten Matrix bevorzugt Schwarzpigmente oder Buntpigmente.

Bei einer weiteren vorteilhaften Ausführungsform der Erfindung sind die Feststoffpartikel ausgewählt aus Leuchtpigmenten, insbesondere aus Fluoreszenzpigmenten. Ein Beispiel für ein Fluoreszenzpigment ist Zinksulfid. Bei Verwendung von Leuchtpigmenten kann die Anordnung der Feststoffpartikel besonders einfach und zuverlässig optisch detektiert werden.

Generell sollte das Material der Feststoffpartikel möglichst inert und stabil sein, um eine dauerhafte Detektierbarkeit zu ermöglichen.

Die erfindungsgemäße Produktverpackung ist nicht auf Verpackungen für pharmazeutische Präparate beschränkt, sondern kann prinzipiell eine Verpackung für jedes beliebige Produkt sein, die eine flächige Schicht mit einer Polymermatrix umfasst, d.h. insbesondere eine Schicht auf Basis eines Kunststoffmaterials. Die flächige Schicht kann in verschiedenen Formen vorliegen, wie nachfolgend beschrieben.

Bei einer vorteilhaften Ausführungsform der Erfindung ist die flächige Schicht eine Beschichtung auf einem Substrat. Das Substrat ist insbesondere ein Bestandteil der Produktverpackung aus Karton, Pappe, Papier oder Kunststoff. Beispielsweise kann es sich hierbei um eine Umverpackung (z.B. eine Schachtel) für Arzneimittel oder Lebensmittel handeln oder um eine verschweißte Kunststoffverpackung oder ein Etikett für verschiedenste Produkte, wobei die Verpackung mit der Feststoffpartikel enthaltenden Polymermatrix beschichtet ist.

Es kann vorteilhaft sein, wenn unterhalb und/oder oberhalb der flächigen Schicht mit der Feststoffpartikel enthaltenden Polymermatrix eine oder mehrere weitere Beschichtungen vorgesehen sind. Insbesondere kann oberhalb dieser flächigen Schicht eine transparente Schutzschicht vorgesehen sein, welche die optische Detektion der Feststoffpartikel nicht behindert, aber als mechanischer Schutz gegen einen Abrieb der Feststoffpartikel enthaltenden Schicht dient.

Bei einer weiteren vorteilhaften Ausführungsform der Erfindung ist die flächige Schicht eine Lage einer ein- oder mehrlagigen Folie. Eine solche Folie kann zur Verpackung von verschiedensten Arten von Produkten als fälschungssichere Produktverpackung eingesetzt werden.

Wie bereits eingangs ausgeführt, stellt sich das Problem von fälschungssicheren Produktverpackungen insbesondere bei pharmazeutischen Präparaten. Eine besonders bevorzugte Ausführungsform der Erfindung mit einer ein- oder mehrlagigen Folie betrifft deshalb eine Pharmaverpackung für Tabletten oder Kapseln, wobei die Folie eine Durchdrückfolie ist.

Derartige Pharmaverpackungen sind als Blisterverpackungen bekannt. Sie umfassen typischerweise ein Unterteil mit Vertiefungen, in denen die Tabletten oder Kapseln aufgenommen sind, und eine mit dem Unterteil versiegelte Durchdrückfolie als Oberteil. Bei entsprechendem Druck von unten wird die Folie von der Tablette oder Kapsel durchstoßen.

Bei einer erfindungsgemäßen fälschungssicheren Pharmaverpackung umfasst die Durchdrückfolie mindestens eine Lage als flächige Schicht mit einer Feststoffpartikel enthaltenden Polymermatrix. Dabei ist es bevorzugt, wenn diese Schicht die äußere Lage einer mehrlagigen Folie bildet. Die Richtungsangabe "außen" ist dabei relativ zum verpackten Produkt zu verstehen, d.h. die äußere Lage der Folie ist dem Produkt und dem Unterteil der Blisterverpackung abgewandt. Die mehrlagige Folie ist bevorzugt mittels Coextrusion hergestellt.

Die Erfindung kann bei Folien und insbesondere bei Durchdrückfolien mit den an sich bekannten Polymermaterialien verwirklicht werden. Bevorzugt enthält die Polymermatrix der flächigen Schicht ein oder mehrere Polyolefine, die ausgewählt sind aus Polyethylen, Polypropylen, insbesondere hochkristallinem Propylen und nukleiertem Polypropylen, sowie Copolymeren und Terpolymeren aus Ethylen, Propylen und/oder höheren α-Olefinen.

Günstigerweise umfasst die Folie ferner eine innere Lage, die eine Siegelschicht ist zum Versiegeln der Folie mit einem Unterteil der Produktverpackung (d.h. insbesondere mit einem Unterteil einer Blisterverpackung). Geeignete Materialien für eine derartige Siegelschicht sind dem Fachmann bekannt.

Die vorliegende Erfindung betrifft ferner ein Verfahren zum Registrieren und Identifizieren von Produktverpackungen, umfassend die Durchführung der folgenden Schritte als Registrierung für jede von einer Vielzahl von erfindungsgemäßen fälschungssicheren Produktverpackungen:
- optisches Detektieren der Anordnung der Feststoffpartikel innerhalb eines definierten Flächenbereichs der Schicht, und
- Auswählen einer Mehrzahl von Feststoffpartikeln, bevorzugt von drei bis zehn Feststoffpartikeln, und elektronisches Speichern von deren Positionen innerhalb des definierten Flächenbereichs, in Bezug auf eine Referenzposition, in einer Datenbank; und
ferner umfassend eine Identifizierung von registrierten Produktverpackungen durch optisches Detektieren der Anordnung der Feststoffpartikel innerhalb des definierten Flächenbereichs der Schicht, und Vergleichen der Anordnung mit den in der Datenbank gespeicherten Positionen.

Bei dem erfindungsgemäßen Verfahren wird somit jede einzelne Produktverpackung anhand der Position von ausgewählten Feststoffpartikeln in einer Datenbank registriert und kann somit zu einem späteren Zeitpunkt eindeutig identifiziert werden. Dabei ist es nicht erforderlich, die Position aller innerhalb des definierten Flächenbereichs detektierten Feststoffpartikel zu speichern, sondern es genügt bereits eine relativ geringe Anzahl von vorzugsweise drei bis zehn Feststoffpartikeln. Aufgrund der zufälligen Verteilung der Feststoffpartikel in der Polymermatrix kann praktisch ausgeschlossen werden, dass sich die Positionen aller ausgewählten Partikel bei einer zweiten Produktverpackung exakt wiederholen.

Der definierte Flächenbereich kann der gesamten Oberfläche auf einer Seite der Produktverpackung entsprechen, oder es kann sich um einen Teilbereich der Oberfläche der Verpackung handeln. Typischerweise hat der definierte Flächenbereich eine Größe von 10 bis 40 cm². Sofern die Produktverpackung insgesamt nicht zu groß ist, beispielsweise im Fall von Pharmablistern, ist es bevorzugt, wenn die gesamte flächige Schicht, d.h. insbesondere die Durchdrückfolie eines Pharmablisters, den definierten Flächenbereich darstellt.

Die Referenzposition, zu der die gespeicherten Positionen der ausgewählten Feststoffpartikel in Bezug gesetzt werden, wird vor Durchführung des Verfahrens für alle Produktverpackungen festgelegt. Die Referenzposition kann z.B. eine Ecke einer rechteckigen Produktverpackung sein oder eine andere definierte Position, die durch eine optisch detektierbare Markierung gekennzeichnet werden kann.

Vorzugsweise wird das Verfahren so ausgeführt, dass die Registrierung der Produktverpackungen unmittelbar nach dem Verpacken der Produkte durchgeführt wird. Die Registrierung erfolgt typischerweise durch den Originalhersteller der Produkte vor der Abgabe in den Vertriebsweg. An einer vorgegebenen Stelle des Vertriebsweges, insbesondere unmittelbar vor der Abgabe an einen Endverbraucher, kann dann jede Produktverpackung identifiziert werden. Dabei wird die Anordnung der Feststoffpartikel mit einem geeigneten Gerät (z.B. in Form eines Handscanners) optisch detektiert und mit den in der Datenbank gespeicherten Positionen verglichen. Wenn die detektierten Positionen in der Datenbank nicht gefunden werden, handelt es sich um eine gefälschte Produktverpackung.

Günstigerweise können zusätzliche Informationen in Bezug auf eine identifizierte Produktverpackung in der Datenbank gespeichert werden, insbesondere die Information, dass die Produktverpackung an einen Endverbraucher abgegeben wurde. Falls dann zu einem späteren Zeitpunkt eine weitere Produktverpackung mit derselben Anordnung der ausgewählten Feststoffpartikel identifiziert wird, deutet dies auf eine Kompromittierung des Systems hin: entweder wurde eine verkaufte Produktverpackung von einem Dritten exakt kopiert (was allerdings in der Praxis kaum möglich sein dürfte), oder die verkaufte Produktverpackung wurde von einem Dritten unberechtigterweise wiederverwendet.

Weitere Merkmale und Einzelheiten der Erfindung ergeben sich aus der nachfolgenden Beschreibung von vorteilhaften Ausführungsbeispielen.

Die Figuren zeigen:
- Figur 1:: eine schematische Querschnittsdarstellung einer erfindungsgemäßen Produktverpackung in Form eines Pharmablisters;
- Figur 2:: eine schematische Querschnittsdarstellung der Durchdrückfolie der Produktverpackung gemäß Figur 1; und
- Figur 3:: eine schematische Draufsicht auf die Produktverpackung gemäß Figur 1.

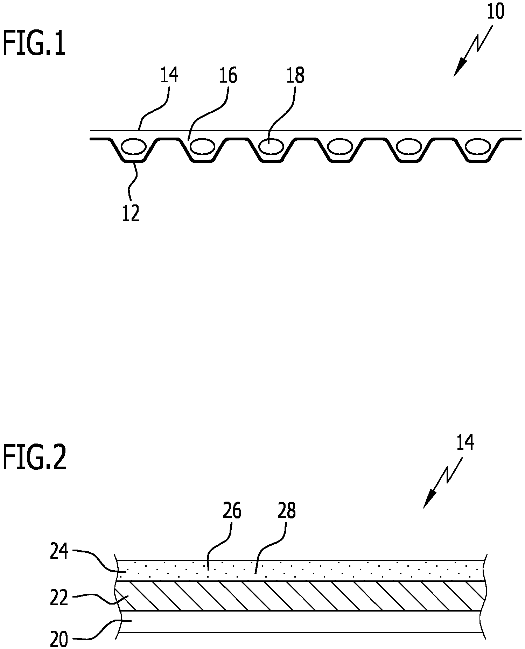

In der Figur 1 ist ein Ausführungsbeispiel einer erfindungsgemäßen fälschungssicheren Produktverpackung 10 in einer schematischen Querschnittsdarstellung gezeigt. Bei der Produktverpackung 10 handelt es sich um einen Pharmablister, umfassend ein Unterteil 12 und eine Durchdrückfolie 14 als Oberteil.

Das Unterteil 12 ist eine umgeformte Kunststofffolie mit einer Mehrzahl von regelmäßig angeordneten Vertiefungen 16 zur Aufnahme eines pharmazeutischen Präparates 18 in Form von Tabletten oder Kapseln.

Die Durchdrückfolie 14 ist mit den Bereichen des Unterteils 12 zwischen den Vertiefungen 16 versiegelt, sodass das pharmazeutische Präparat 18 in der Produktverpackung 10 hermetisch verschlossen und vor äußeren Einflüssen geschützt ist. Der Aufbau und die Zusammensetzung der Durchdrückfolie 14 ist im Rahmen der vorliegenden Erfindung nicht limitiert, so lange sie mindestens eine flächige Schicht mit einer Polymermatrix umfasst, in der eine Vielzahl von Feststoffpartikeln in zufälliger Anordnung enthalten sind.

Im vorliegenden Ausführungsbeispiel hat die Durchdrückfolie 14 einen typischen dreilagigen Aufbau, wie in der Figur 2 schematisch dargestellt. Demnach umfasst die Durchdrückfolie 14 als innere Lage (d.h. dem Unterteil 12 zugewandt) eine Siegelschicht 20, eine mittlere Lage 22, die im Hinblick auf die Durchdrückeigenschaften der Folie 14 optimiert ist, sowie als äußere Lage die erfindungsgemäße flächige Schicht 24 mit einer Feststoffpartikel 28 nenthaltenden Polymermatrix 26. Eine Durchdrückfolie 14 mit einem derartigen Aufbau kann insbesondere mittels Coextrusion hergestellt werden.

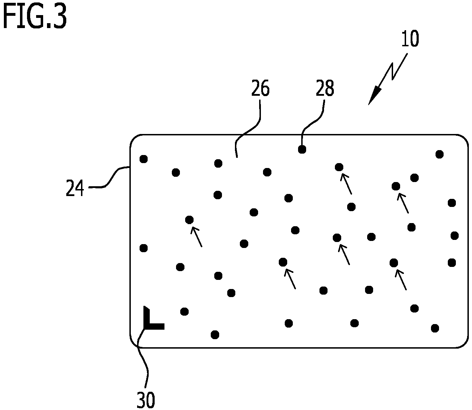

Die Figur 3 zeigt schematisch eine Draufsicht auf die Produktverpackung 10, d.h. auf die flächige Schicht 24 als äußere Lage der Durchdrückfolie 14. In der Polymermatrix 26 der flächigen Schicht 24 sind Feststoffpartikel 28 in einer zufälligen (statischen) Anordnung enthalten, beispielsweise in einer Menge von 20 bis 30 Partikeln pro cm². Die Feststoffpartikel 28 können Farbpigmente oder Fluoreszenzpigmente sein, beispielsweise mit einer mittleren Partikelgröße von ca. 4 µm und einer relativ engen Partikelgrößenverteilung um diesen Mittelwert. Solche Partikel können einfach und zuverlässig optisch detektiert werden, beispielsweise mit einem Detektor in Form eines Handscanners.

Zur Registrierung und Identifizierung der Produktverpackung 10 bei der Durchführung des erfindungsgemäßen Verfahrens wird eine bestimmte Anzahl der optisch detektierten Feststoffpartikel 28 ausgewählt und deren Positionen werden in einer Datenbank elektronisch gespeichert. In der Figur 3 sind beispielhaft sechs Feststoffpartikel 28, deren Positionen gespeichert werden, mit Pfeilen markiert. Die Speicherung der Positionen erfolgt in Bezug auf eine Referenzposition 30, die im linken unteren Eck der Produktverpackung 10 markiert ist. Die Markierung der Referenzposition 30 hat hier die Form eines rechten Winkels, sodass bei der Detektion der Feststoffpartikel 28 auch die Ausrichtung der Produktverpackung 10 festgelegt werden kann.

### Bezugszeichenliste

- 10: Produktverpackung
- 12: Unterteil
- 14: Durchdrückfolie
- 16: Vertiefung
- 18: pharmazeutisches Präparat
- 20: Siegelschicht (innere Lage)
- 22: mittlere Lage
- 24: flächige Schicht (äußere Lage)
- 26: Polymermatrix
- 28: Feststoffpartikel
- 30: Referenzposition

## Patentansprüche

1. Fälschungssichere Produktverpackung (10), umfassend eine flächige Schicht (24) mit einer Polymermatrix (26), wobei in der Polymermatrix (26) eine Vielzahl von Feststoffpartikeln (28) enthalten sind, deren zufällige Anordnung innerhalb eines definierten Flächenbereichs der Schicht (24) optisch detektierbar ist.

2. Fälschungssichere Produktverpackung (10) nach Anspruch 1, wobei in der Polymermatrix 10 bis 50 Feststoffpartikel pro cm² enthalten sind, bevorzugt 20 bis 30 Feststoffpartikel pro cm².

3. Fälschungssichere Produktverpackung (10) nach einem der vorangehenden Ansprüche, wobei die Feststoffpartikel eine mittlere Partikelgröße von ca. 1 bis ca. 10 µm aufweisen, bevorzugt von ca. 3 bis ca. 6 µm.

4. Fälschungssichere Produktverpackung (10) nach einem der vorangehenden Ansprüche, wobei die Feststoffpartikel eine enge Partikelgrößenverteilung aufweisen, bei der mindestens 90 Gew.% aller Partikel eine Größe im Bereich von ±10% um den Mittelwert aufweisen.

5. Fälschungssichere Produktverpackung (10) nach einem der vorangehenden Ansprüche, wobei die Feststoffpartikel einen farblichen Kontrast zu der Polymermatrix bilden, und wobei die Feststoffpartikel bevorzugt ausgewählt sind aus anorganischen oder organischen Farbpigmenten.

6. Fälschungssichere Produktverpackung (10) nach einem der vorangehenden Ansprüche, wobei die Feststoffpartikel ausgewählt sind aus Leuchtpigmenten, insbesondere aus Fluoreszenzpigmenten.

7. Fälschungssichere Produktverpackung (10) nach einem der vorangehenden Ansprüche, wobei die flächige Schicht (24) eine Beschichtung auf einem Substrat ist, und wobei das Substrat bevorzugt ein Bestandteil der Produktverpackung (10) aus Karton, Pappe, Papier oder Kunststoff ist.

8. Fälschungssichere Produktverpackung (10) nach Anspruch 7, wobei unterhalb und/oder oberhalb der flächigen Schicht (24) mit der Feststoffpartikel (28) enthaltenden Polymermatrix (26) eine oder mehrere weitere Beschichtungen vorgesehen sind.

9. Fälschungssichere Produktverpackung (10) nach einem der Ansprüche 1 bis 6, wobei die flächige Schicht (24) eine Lage einer ein- oder mehrlagigen Folie (14) ist.

10. Fälschungssichere Produktverpackung (10) nach Anspruch 9 in Form einer Pharmaverpackung für Tabletten oder Kapseln (18), wobei die Folie eine Durchdrückfolie (14) ist.

11. Fälschungssichere Produktverpackung (10) nach Anspruch 9 oder 10, wobei die flächige Schicht (24) mit der Feststoffpartikel (28) enthaltenden Polymermatrix (26) die äußere Lage einer mehrlagigen Folie (14) bildet, und wobei die mehrlagige Folie (14) bevorzugt mittels Coextrusion hergestellt ist.

12. Fälschungssichere Produktverpackung (10) nach einem der Ansprüche 9 bis 11, wobei die Polymermatrix ein oder mehrere Polyolefine enthält, die ausgewählt sind aus Polyethylen, Polypropylen, insbesondere hochkristallinem Polypropylen und nukleiertem Polypropylen, sowie Copolymeren und Terpolymeren von Ethylen, Propylen und/oder höheren α-Olefinen.

13. Fälschungssichere Produktverpackung (10) nach einem der Ansprüche 9 bis 12, wobei die Folie (14) ferner eine innere Lage umfasst, die eine Siegelschicht (20) ist zum Verschweißen der Folie (14) mit einem Unterteil (12) der Produktverpackung (10).

14. Verfahren zum Registrieren und Identifizieren von Produktverpackungen, umfassend die Durchführung der folgenden Schritte als Registrierung für jede von einer Vielzahl von fälschungssicheren Produktverpackungen nach einem der vorangehenden Ansprüche:
- optisches Detektieren der Anordnung der Feststoffpartikel innerhalb eines definierten Flächenbereichs der Schicht, und
- Auswählen einer Mehrzahl von Feststoffpartikeln, bevorzugt von drei bis zehn Feststoffpartikeln, und elektronisches Speichern von deren Positionen innerhalb des definierten Flächenbereichs, in Bezug auf eine Referenzposition, in einer Datenbank; und
ferner umfassend eine Identifizierung von registrierten Produktverpackungen durch optisches Detektieren der Anordnung der Feststoffpartikel innerhalb des definierten Flächenbereichs der Schicht, und Vergleichen der Anordnung mit den in der Datenbank gespeicherten Positionen.

15. Verfahren nach Anspruch 14, wobei die Registrierung der Produktverpackungen unmittelbar nach dem Verpacken der Produkte durchgeführt wird und jede Produktverpackung an einer vorgegebenen Stelle des Vertriebsweges, insbesondere unmittelbar vor der Abgabe an einen Endverbraucher, identifiziert wird, und wobei bevorzugt zusätzliche Informationen in Bezug auf eine identifizierte Produktverpackung in der Datenbank gespeichert werden, insbesondere die Information, dass die Produktverpackung an einen Endverbraucher abgegeben wurde.
